# FASCICULE DE BREVET EUROPEEN

(11) **EP 3 325 875 B1**
(45) Date de publication et mention de la délivrance du brevet: **27.01.2021**
(21) Numéro de dépôt: 16731605.8
(22) Date de dépôt: 23.06.2016
(51) Int. Cl.: F21S 8/02, F21V 23/06, F21V 21/04, H01R 13/625, H01R 33/46, H02G 3/20, F21V 21/03

(54) **CONNECTEUR POUR DISPOSITIFS ELECTRIQUES**
ANSCHLUSS FÜR ELEKTROGERÄTE
CONNECTOR FOR ELECTRICAL DEVICES

(30) Priorité: 17.07.2015 EP 15177375
(43) Date de publication de la demande: 30.05.2018
(73) Titulaire: Finkbeiner, Jacques, 1944 Le Fouly (CH); Heiniger, Sonia, 1752 Villars sur Glane (CH); Cosandey, Johan, 1004 Lausanne (CH)
(72) Inventeur: HEINIGER, Sonia, 1752 Villars-sur-Glâne (CH); COSANDEY, Johan, 1004 Lausanne (CH); HUMBERT, Charles, 1773 Lechelles (CH)
(74) Mandataire: ICB SA
(86) Numéro de dépôt international: PCT/EP2016/064603
(87) Numéro de publication internationale: WO 2017/012824

(56) Documents cités:
- WO-A1-2012/079550
- WO-A1-2014/053145
- DE-A1- 3 142 508
- DE-U1-202012 103 559
- US-A- 3 638 170
- US-A- 3 985 417
- US-A- 6 146 191
- US-A1- 2005 036 321

## Description

### Domaine de l'invention

L'invention se rapporte aux appareils électriques, et plus particulièrement aux connecteurs permettant d'installer un dispositif électrique au plafond ou sur un mur.

### Arrière-plan de l'invention

Il est connu du document GB 2 435 722 un connecteur électrique permettant de fixer et relier rapidement un dispositif électrique à un réseau électrique au niveau d'un plafond. Le connecteur électrique est fixé dans une boite électrique au moyen d'un système à baïonnette.

Un tel dispositif présente l'inconvénient d'avoir une mise en place compliquée. En effet, le connecteur nécessite d'abord de relier le dispositif électrique au connecteur par le biais d'une borne de connexion électrique. De plus, un tel connecteur possède des fiches de connexion fixées par le biais de vis et ne permettent donc pas d'assurer une connexion électrique fiable au fil du temps et des installations/désinstallations de dispositifs électriques tels que des luminaires.

US 3 638 170 A divulgue un dispositif de connexion selon le préambule de la revendication 1.

### Résumé de l'invention

L'invention a notamment pour objectif de pallier les différents inconvénients de ces techniques connues.

Plus précisément, un objectif de l'invention est de fournir un connecteur qui soit simple et peu coûteux à mettre en œuvre.

Ces objectifs, ainsi que d'autres qui apparaîtront plus clairement par la suite, sont atteints selon l'invention à l'aide d'un dispositif de connexion rapide, le dispositif comprenant :
- une prise femelle formant une boîte électrique destinée à être installée dans un support mural, la prise femelle comprenant une cavité recevant un premier connecteur électrique destiné à être relié au moins indirectement à un réseau électrique,
- une prise mâle comprenant un second connecteur électrique et présentant une forme complémentaire à la cavité de la prise femelle, configurée pour venir en prise de manière amovible dans la partie femelle, la prise mâle pouvant passer d'une position déverrouillée dans laquelle la prise mâle peut être insérée dans la prise femelle, vers une position verrouillée dans laquelle la prise mâle est solidaire de la prise femelle et le second connecteur électrique coopère avec le premier connecteur électrique,
- un conducteur électrique comprenant une première extrémité reliée au second connecteur électrique, et une autre extrémité configurée pour être connectée à un dispositif électrique, le conducteur électrique s'étendant au travers de la prise mâle, la prise mâle et le conducteur électrique étant deux éléments distincts.

Selon l'invention, la prise mâle comprend un canal s'étendant sur toute la hauteur de la prise mâle, ledit canal débouchant sur un logement muni d'un épaulement formé dans la prise mâle, ledit logement étant agencé pour recevoir le second connecteur électrique, et le conducteur électrique et le second connecteur électrique forment un élément monobloc agencé pour être introduit dans le canal de la prise mâle jusqu'à ce que le second connecteur électrique vienne en butée contre l'épaulement dans le logement de manière que le second connecteur électrique appuie sur l'épaulement du logement et reprenne le poids du dispositif électrique.
- Conformément à d'autres variantes avantageuses de l'invention :
- le second connecteur électrique est libre en rotation au sein du logement ;
- le second connecteur électrique présente une forme complémentaire de l'épaulement ;
- la prise mâle est monobloc et présente une forme en T, le corps du T étant de forme cylindrique et la tête du T présentant une forme sensiblement oblongue ;
- le second connecteur électrique est disposé sur le dessus de la tête du T de la prise mâle ;
- le second connecteur électrique est disposé sur l'un des côtés de la tête du T de la prise mâle ;
- la prise mâle (20) et le conducteur électrique (40) sont deux éléments distincts, le conducteur électrique (40) étant emboité dans la prise mâle (20) ;
- le second connecteur électrique est affleurant avec la surface de la prise mâle de manière que le second connecteur électrique est maintenu en contact avec le premier connecteur électrique lorsque la prise mâle est en position verrouillée ;
- le dispositif comprend des moyens pour mettre en prise la partie mâle dans la partie femelle, tel qu'un système de fixation à baïonnette ;
- la cavité de la prise femelle comprend des moyens de blocage de la prise mâle dans la prise femelle en position verrouillée ;
- la prise mâle, la prise femelle sont réalisés en matière plastique et le second connecteur électrique est réalisé en caoutchouc vulcanisé ;
- la partie femelle comprend au moins un dispositif électronique relié au réseau électrique indépendamment du premier connecteur électrique ;
- la partie femelle comprend au moins un logement configuré pour recevoir le dispositif électronique ;
- le dispositif électronique est un moyen de communication sans fil ;
- le dispositif électronique est un détecteur de fumées.

### Description sommaire des dessins

D'autres particularités et avantages ressortiront clairement de la description qui en est faite ci-après, à titre indicatif et nullement limitatif, en référence aux dessins annexés, dans lesquels :
- les figures 1a et 1b sont respectivement des vues en perspective d'une prise femelle et d'une prise mâle d'un dispositif de connexion conforme à l'invention ;
- la figure 1c est une vue en perspective d'une prise femelle montrant schématiquement en pointillés de la configuration de la cavité intérieure de celle-ci
- la figure 2a est une vue en coupe d'une prise femelle conforme à l'invention ;
- les figures 2b et 2c sont des vues en coupe d'une prise mâle selon un premier et un deuxième mode de réalisation de l'invention ;

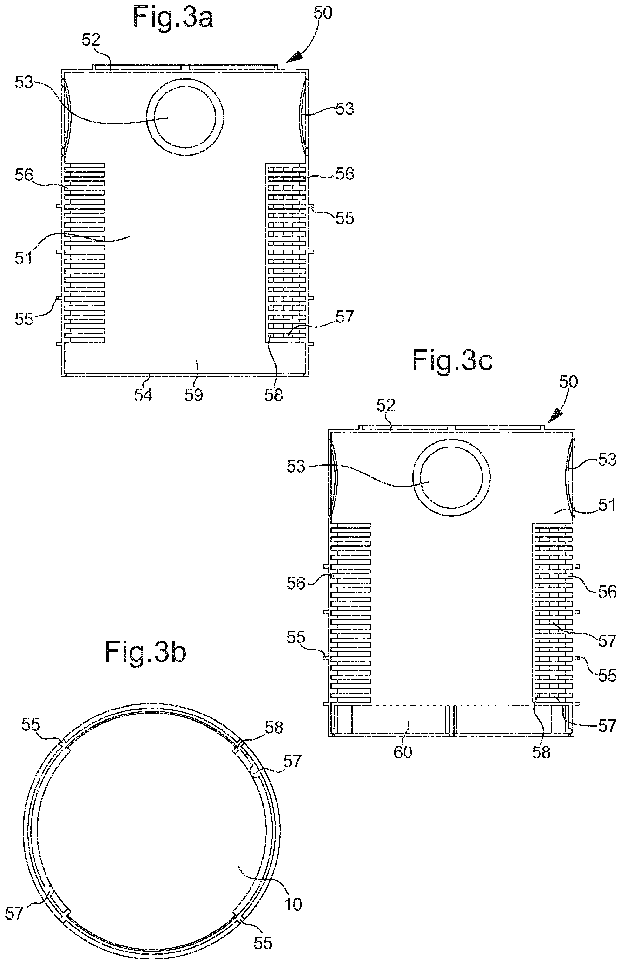

- les figures 3a à 3c sont des vues en coupe d'un boîtier d'encastrement ;

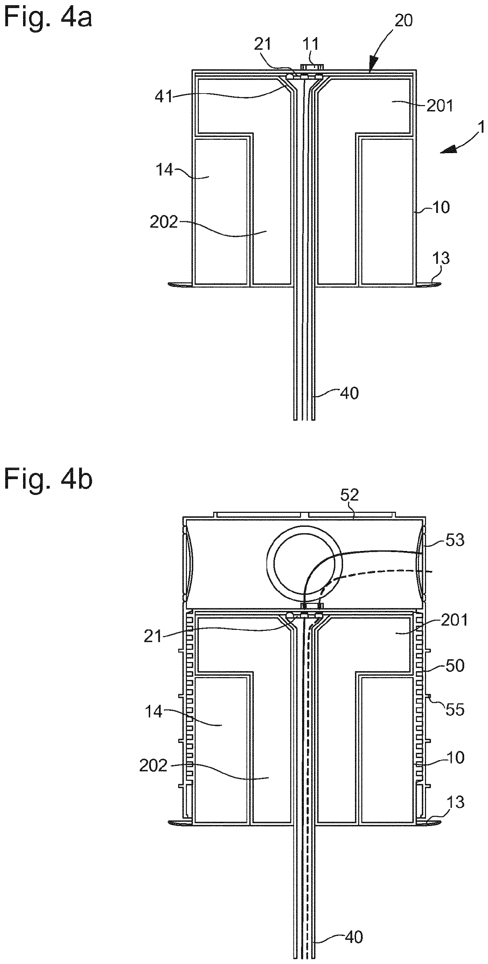

- les figures 4a et 4b sont respectivement des vues en coupe d'une prise mâle logée dans la prise femelle et d'un ensemble prise mâle/prise femelle solidarisé dans un boîtier d'encastrement ;

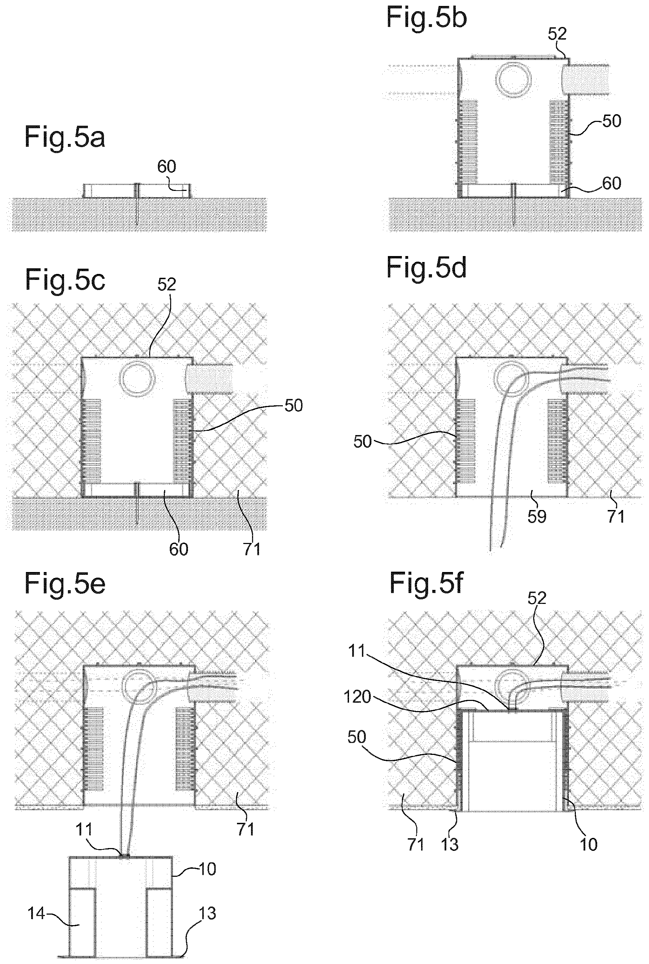

- les figures 5a à 5f illustrent un procédé de pose d'un kit ;

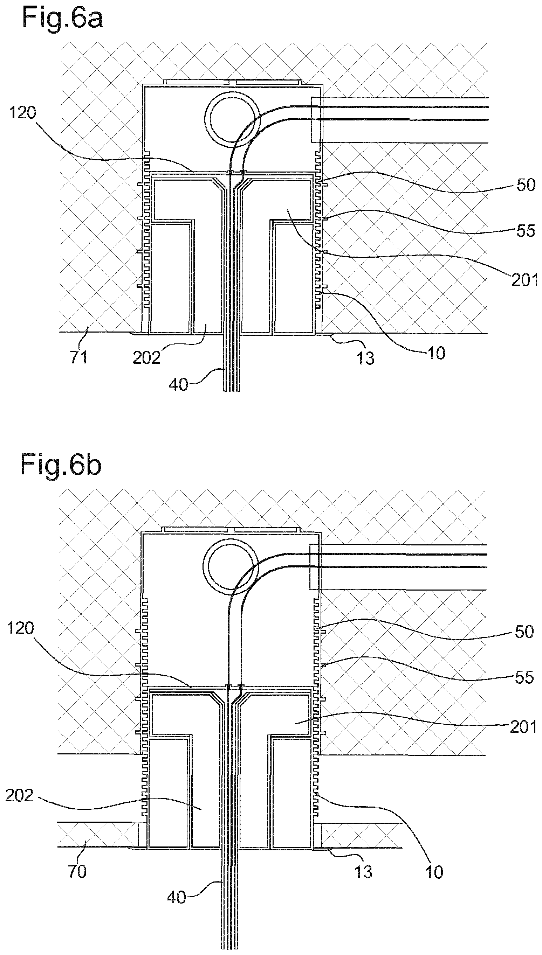

- les figures 6a et 6b sont respectivement des vues en coupe d'un kit installé dans un plafond et d'un kit installé dans un faux plafond.

### Description détaillée des modes de réalisation préférés

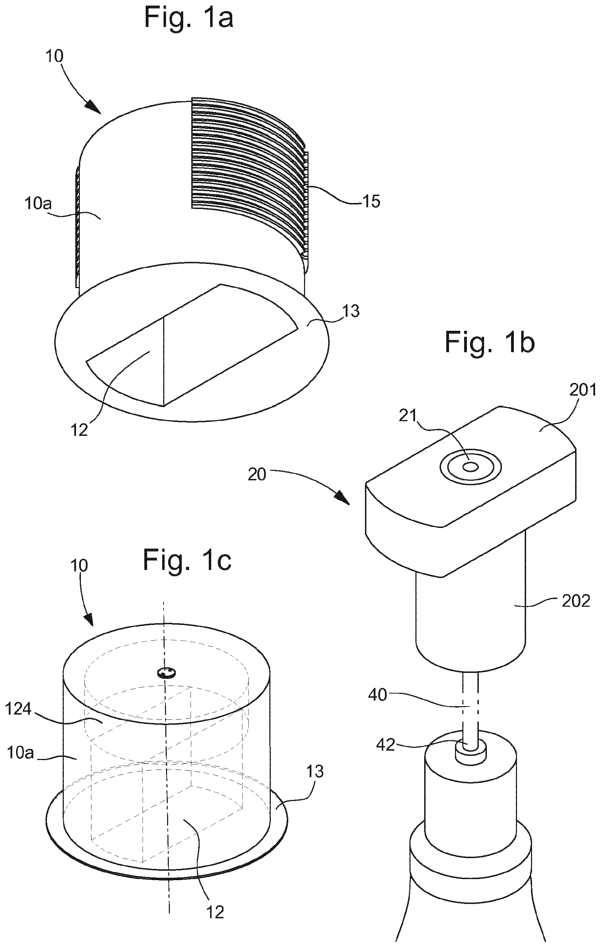

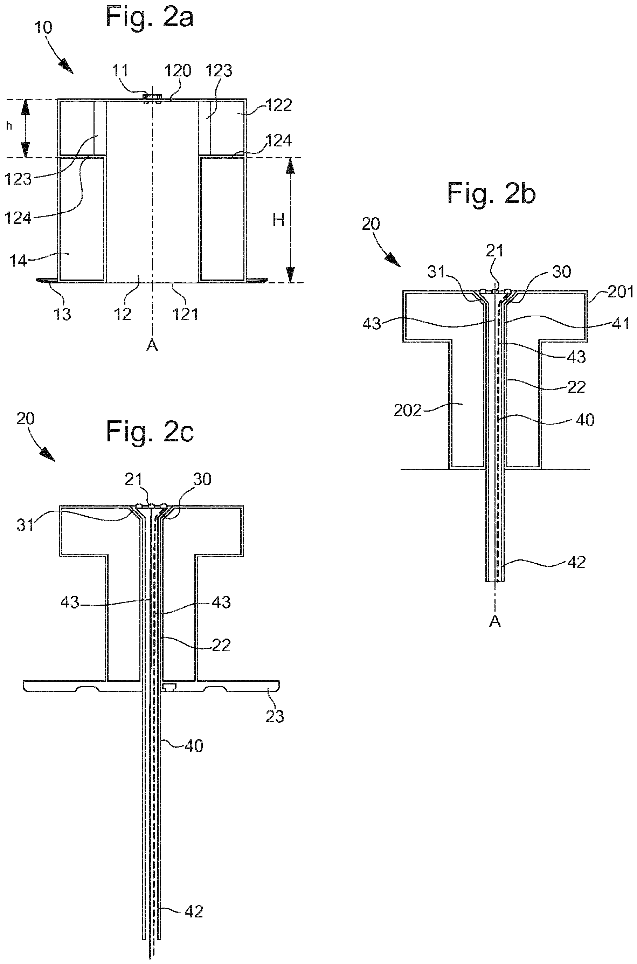

Un dispositif de connexion selon un mode de réalisation de l'invention va maintenant être décrit dans ce qui suit faisant référence conjointement aux figures 1a, 1b, 1c, 2a à 2c.

Dans ce qui suit, on entend par support mural, tant les murs, que les plafonds ou les planchers ou toutes autres parois.

L'invention concerne un dispositif 1 de connexion selon la revendication 1 comprenant :
- une prise femelle 10 destinée à être installée dans un support mural, la prise femelle 10 comprenant une cavité 12 présentant un fond 120 recevant un premier connecteur électrique 11 destiné à être relié au moins indirectement à un réseau électrique,
- une prise mâle 20, ayant ici la forme générale d'un T, comprenant un second connecteur électrique 21 et présentant une forme complémentaire à la cavité 12 de la prise femelle, configurée pour venir en prise de manière amovible dans la partie femelle 10, la prise mâle 20 pouvant passer d'une position déverrouillée dans laquelle la prise mâle 20 peut être insérée dans la prise femelle 10, vers une position verrouillée dans laquelle la prise mâle 20 est solidaire de la prise femelle 10 - par l'intermédiaire des branches du T reposant sur une surface complémentaire prévue dans la cavité 12 à la façon d'un dispositif de fixation à baïonnette - et le second connecteur électrique 21 coopère axialement avec le premier connecteur électrique 11,
- un conducteur électrique 40 comprenant une première extrémité 41 reliée au second connecteur électrique 21, et une autre extrémité 42 configurée pour être connectée à un dispositif électrique, le conducteur électrique s'étendant au travers de la prise mâle 20.

Selon l'invention, le second connecteur électrique 21 comprend des moyens agencés pour reprendre le poids du dispositif électrique.

Le dispositif selon l'invention comprend deux pièces principales, à savoir une prise femelle 10 prévue pour être fixée à demeure dans un plafond 71 prévu à cet effet, et une prise mâle 20 prévue pour être solidaire et connectée électriquement au dispositif électrique.

La prise femelle 10 peut être installée, préférentiellement par un professionnel du bâtiment, idéalement lors de la construction de l'habitation, par exemple en coulant le plafond 71 autour d'un gabarit aux dimensions adéquates. Une fois le gabarit retiré, la prise femelle 10 peut être installée dans la cavité, le premier connecteur électrique 11 étant relié électriquement au réseau électrique de l'habitation.

Plus précisément, et telle qu'illustrée sur les figures, la prise femelle 10 se présente sous la forme d'un cylindre présentant une cavité 12 sensiblement parallélépipédique, centrée autour d'un axe A confondu avec l'axe de révolution formant le cylindre. La cavité 12 s'étend sur toute ou partie de la hauteur de la prise femelle 10 et est munie d'une entrée 121 au niveau de la face inférieure de la prise femelle 10. Avantageusement, le fond 120 peut être percé à proximité du centre pour permettre le passage du premier connecteur électrique 11, destiné à être reliée au réseau électrique. Le premier connecteur électrique 11 est monté solidaire sur le fond 120, par exemple par vissage ou bien par chassage et collage.

La prise femelle 10 comporte une enveloppe extérieure cylindrique 10a terminée à sa base proche de l'ouverture de la cavité 12 par une collerette d'appui 13 configurée pour appuyer contre le plafond 71 et cacher la partie périphérique se trouvant autour de la prise femelle 10. L'enveloppe extérieure 10a comporte en outre une série de rainures 15 s'étendant autour de la périphérie de l'enveloppe et espacées les unes des autres selon l'axe A. Les rainures 15 permettent d'une part de rigidifier l'enveloppe extérieure 10a, et d'autre part, de servir d'organes d'ancrage permettant de maintenir l'enveloppe extérieure 10a dans la dalle béton dans laquelle la prise femelle sera disposée.

Dans l'exemple ces rainures sont interrompues le long de la circonférence de l'enveloppe, mais pourraient, selon une variante non représentée, s'étendre de manière continue autour de l'enveloppe. De préférence, ces rainures s'étendent selon une hélice à la surface de ladite enveloppe extérieure 10a. Le nombre de rainures et leur hauteur est variable et dépend notamment du poids du luminaire destiné à être connecté au dispositif de l'invention. Dans une variante de réalisation de la prise femelle 10 les rainures 15 peuvent être totalement omises ou remplacées par exemple par une collerette s'étendant à partir de l'enveloppe 10a au voisinage du premier connecteur électrique 11.

Selon une variante de réalisation de l'invention, la partie femelle 10 peut présenter au moins une réservation 14 configurée pour recevoir un dispositif électronique relié au réseau électrique indépendamment du premier connecteur électrique 11. On peut par exemple imaginer que le dispositif électronique est un moyen de communication sans fil, tel qu'un module wifi ou bien LTE, on peut également imaginer que ce dispositif électronique consiste en un détecteur de fumées.

Comme on peut l'observer sur la vue 1c en liaison avec la vue en coupe de la figure 2a dans lesquelles les rainures 15 ont été non représentées, la cavité de la prise femelle 10 débouche sur un évidement 122 cylindrique de diamètre D, centré autour de l'axe A, dont le fond est confondu avec le fond 120 de la prise femelle 10. La cavité 12 est configurée pour guider la partie mâle 20 dans la partie femelle 10 jusqu'à l'évidement 122 cylindrique.

La prise mâle 20, visible notamment aux figures 1a et 2b, comprend une première portion, dite tête 201 de la prise mâle 20, sensiblement parallélépipédique, et donc de forme similaire à la cavité 12, et une deuxième portion, dite corps 202 de la prise mâle 20, de forme cylindrique.

Selon un mode de réalisation particulier de l'invention, la prise mâle 20 est monobloc et se présente sous la forme d'un T, le corps du T étant de forme cylindrique et la tête du T étant de forme sensiblement oblongue.

Selon ce mode de réalisation, le second connecteur électrique 21 peut être disposé sur le dessus ou bien l'un des côtés de la tête du T de la prise mâle 20.

Avantageusement, la hauteur du corps 202 de la prise mâle est sensiblement identique à la hauteur H de la cavité 12, et la hauteur de la tête 201 de la prise mâle 20 est sensiblement identique à la hauteur h de l'évidement 122.

La tête 201 de la prise mâle 20 forme un premier organe d'accrochage à baïonnette, le deuxième organe d'accrochage étant formé par l'évidement 122. Dans le mode de réalisation illustré sur les figures, la prise mâle 20 peut s'engager à l'intérieur de la cavité 12 de la prise femelle 10. La tête 201 de la prise mâle 20, présente des dimensions proches de celles de la cavité 12 de manière à laisser un léger jeu entre les deux, afin d'insérer aisément la prise mâle 20 dans la prise femelle 10.

La prise mâle 20 est montée à rotation dans la prise femelle 10 une fois que la tête 201 est entrée en butée contre le fond 120. La tête 201 repose alors contre les bords inférieurs 124 de l'évidement 122, empêchant la prise mâle 20 de sortir de la prise femelle 10. Comme on peut l'observer sur la vue en coupe à la figure 2b, la tête 201 de la prise mâle 20 comprend un second connecteur électrique 21 configuré pour coopérer axialement avec le premier connecteur électrique 11.

Selon un mode de réalisation préférentiel de l'invention, l'évidement 122 comprend sur sa paroi latérale des protubérances 123 matérialisant une butée indiquant que la rotation de la prise mâle 20 est suffisante pour assurer un maintien sûr dans la prise femelle 10. Les protubérances 123 peuvent être agencés à 180° l'une de l'autre, mais d'autres dispositions sont possibles, pour autoriser plusieurs positions de la prise mâle 20 par rapport à la prise femelle 10.

La prise mâle 20 et le conducteur électrique 40 sont deux éléments distincts, le conducteur électrique 40 étant emboité dans la prise mâle 20, de manière à simplifier la fabrication et le montage du dispositif 1.

Pour monter le second connecteur électrique 21 à la prise mâle 20, le second connecteur est dans un premier temps connecté au conducteur électrique 40, puis le conducteur électrique 40 est introduit par emboitement dans un canal 22 qui traverse la prise mâle 20 sur toute sa hauteur, jusqu'à ce que le second connecteur électrique 21 vienne en butée contre la prise mâle 20.

Ainsi, pour assembler la prise mâle 20 à la prise femelle 10, on introduit la tête 201 de la prise mâle dans la cavité 12 de la prise femelle 10, en la faisant coulisser jusqu'au fond 120 de la prise femelle 10, puis en tournant la prise mâle 20 dans l'évidement 122 pour faire entrer la tête 201 en butée contre les protubérances 123.

La prise mâle peut donc passer d'une position déverrouillée dans laquelle la prise mâle 20 peut être insérée dans la prise femelle 10, vers une position verrouillée dans laquelle la prise mâle 20 est solidaire de la prise femelle 10 et le second connecteur électrique 21 coopère axialement avec le premier connecteur électrique 11. Un tel mécanisme permet un montage aisé et rapide d'un dispositif électrique au plafond.

Selon une variante de l'invention, la prise femelle 10 comprend des moyens de blocage de la prise mâle 20 dans la prise femelle 10 en position verrouillée. Ces moyens de blocage peuvent, par exemple, comprendre des ergots sur la paroi de l'évidement 122 à proximité des protubérances 123, de manière à créer une force de frottement suffisante pour maintenir en place la prise mâle 20 dans la prise femelle 10.

De manière avantageuse, la prise mâle 20 est solidaire d'un dispositif électrique à installer. Les figures 2b et 2c illustrent une prise mâle 20 recevant le second connecteur électrique 21, et un conducteur électrique 40 recevant au moins deux câbles électriques 43. Le conducteur électrique 40 présente une première extrémité 41 reliée au second connecteur électrique 21, et une autre extrémité 42 configurée pour être connectée à un dispositif électrique, le conducteur électrique s'étendant au travers de la prise mâle 20 par le biais du canal 22. Le canal 22 présente de préférence une section circulaire, s'étend sur toute ou partie de la hauteur de la partie mâle 20 et est centré sur l'axe A.

L'assemblage du conducteur électrique 4 et de la prise mâle 20 se fait, de préférence, par le fabricant du dispositif électrique, afin de simplifier au maximum le travail à effectuer par l'utilisateur final. Le cas échéant, comme illustré à la figure 2c, la prise mâle 20 peut comprendre une assiette de fixation 23 pourvue d'orifices afin de permettre le montage de tout type de luminaires de type applique par exemple, ou encore de lampes à suspension.

Selon l'invention, la prise mâle 20 comprend des moyens pour reprendre le poids du dispositif électrique lorsque la prise mâle est solidaire de la prise femelle. Ces moyens comprennent un logement 30 ménagé dans la prise mâle 20 et configuré pour recevoir le second connecteur électrique 21, le logement 30 comprenant un épaulement 31 agencé pour reprendre le poids du dispositif électrique lorsque le dispositif est monté.

Plus précisément, et tel qu'illustré à la figure 2b, le logement 30 est ménagé dans la tête 201 de la prise mâle 20, préférentiellement au centre de la prise mâle, de manière que les premier et second connecteurs électriques 11 et 21 sont alignés sur le même axe A, le canal 22 débouchant sur le logement 30. Tel que représenté sur les figures, le logement 30 est de forme conique et l'épaulement 31 est formé par la paroi oblique du logement 30. Bien évidemment, d'autres formes de logement peuvent être mise en place, par exemple parallélépipédique ou circulaire, avec des dimensions supérieures au diamètre du canal 22 par lequel passe le conducteur électrique 4.

Selon un aspect particulièrement avantageux de l'invention, le second connecteur électrique 21 présente une forme complémentaire de l'épaulement 31, de manière que le second connecteur électrique 21 appuie sur l'épaulement 31 du logement 30 et reprenne le poids du dispositif électrique. Le second connecteur électrique 21 peut être disposé libre en rotation autour de l'axe A au sein du logement 30 de manière à faciliter la rotation du dispositif électrique relié second au connecteur électrique 21 par le biais du conducteur électrique 40.

Tel que représenté sur les figures, le second connecteur électrique 21 est affleurant avec la surface de la prise mâle 20 de manière que le second connecteur électrique 21 est maintenu en contact avec le premier connecteur électrique 11 lorsque la prise mâle 20 est en position verrouillée.

Les connecteurs électriques 11 et 21 peuvent présenter, chacun, deux fiches de contact, ces fiches de contact pouvant être matérialisées par des lames ressort afin de combler un éventuel jeu entre la prise mâle 20 et la prise femelle 10.

Selon un aspect particulier de l'invention, le second connecteur électrique 21 et le conducteur électrique 40 peuvent former un élément monobloc, les câbles électriques 43 étant connectés au second connecteur électrique 21 et le tout étant ensuite recouvert d'une gaine par exemple.

La prise mâle 20, la prise femelle 10 et le second connecteur électrique 21 peuvent être réalisés en caoutchouc vulcanisé de manière à augmenter leur résistance à la traction et ainsi augmenter la durée de vie du dispositif.

### NOMENCLATURE

| | |
|---|---|
| 1. Dispositif de connexion, | 40. Conducteur électrique, |
| 10. Prise femelle, | 41. Première extrémité du |
| 10a. Enveloppe extérieure, | conducteur, |
| 11. Premier connecteur électrique, | 42. Seconde extrémité du conducteur, |
| 12. Cavité, | |
| 120. Fond de la prise femelle, | 43. Fils électriques, |
| 121. Entrée de la cavité, | 50. Boîtier d'encastrement, |
| 122. Evidement, | 51. Corps du boîtier, |
| 123. Protubérances, | 52. Fond du boîtier, |
| 124. Bords inférieurs de l'évidement, | 53. Voiles fracturables, |
| | 54. Rebord annulaire du boîtier, |
| 13. Collerette d'appui, | 55. Nervures, |
| 14. Réservation, | 56. Rainures, |
| 15. Rainures, | 57. Protubérances, |
| 20. Prise Mâle, | 58. Butées, |
| 201. Tête de la prise mâle, | 59. Ouverture du boîtier, |
| 202. Corps de la prise mâle, | 60. Couvercle, |
| 21. Second connecteur électrique, | 70. Faux plafond, |
| 22. Canal, | 71. Plafond, |
| 23. Assiette de fixation | A. Axe, |
| 30. Logement, | h. Hauteur de l'évidement, |
| 31. Epaulement, | H. Hauteur de la cavité. |

## Revendications

1. Dispositif (1) de connexion comprenant :
- une prise femelle (10) destinée à être installée dans un plafond (71), la prise femelle (10) comprenant une cavité (12) présentant un fond (120) recevant un premier connecteur électrique (11) destiné à être relié au moins indirectement à un réseau électrique,
- une prise mâle (20) comprenant un second connecteur électrique (21) et présentant une forme complémentaire à la cavité (12) de la prise femelle, configurée pour venir en prise de manière amovible dans la partie femelle (10), la prise mâle (20) pouvant passer d'une position déverrouillée dans laquelle la prise mâle (20) peut être insérée dans la prise femelle (10), vers une position verrouillée dans laquelle la prise mâle (20) est solidaire de la prise femelle (10) et le second connecteur électrique (21) coopère axialement avec le premier connecteur électrique (11),
- un conducteur électrique (40) comprenant une première extrémité (41) reliée au second connecteur électrique (21), et une autre extrémité (42) configurée pour être connectée à un dispositif électrique, le conducteur électrique s'étendant au travers de la prise mâle (20), la prise mâle (20) et le conducteur électrique (40) étant deux éléments distincts,
**caractérisé en ce que** la prise mâle comprend un canal (22) s'étendant sur toute la hauteur de la prise mâle (20), ledit canal (22) débouchant sur un logement (30) muni d'un épaulement (31) formé dans la prise mâle (20), ledit logement étant agencé pour recevoir le second connecteur électrique (21),
et **en ce que** le conducteur électrique (40) et le second connecteur électrique (21) forment un élément monobloc agencé pour être introduit dans le canal (22) de la prise mâle (20) jusqu'à ce que le second connecteur électrique (21) vienne en butée contre l'épaulement (31) dans le logement (30) de manière que le second connecteur électrique (21) appuie sur l'épaulement (31) du logement (30) et reprenne le poids du dispositif électrique.

2. Dispositif (1) de connexion selon la revendication 1, dans lequel le second connecteur électrique (21) est libre en rotation au sein du logement (30).

3. Dispositif (1) de connexion selon la revendication 1 ou 2, dans lequel le second connecteur électrique (21) présente une forme complémentaire de l'épaulement (31).

4. Dispositif (1) de connexion selon la revendication 1, **caractérisé en ce que** la prise mâle (20) est monobloc et présente une forme en T, le corps du T étant de forme cylindrique et la tête du T présentant une forme sensiblement oblongue.

5. Dispositif (1) de connexion selon la revendication 4, dans lequel le second connecteur électrique (21) est disposé sur le dessus de la tête du T de la prise mâle (20).

6. Dispositif (1) de connexion selon la revendication 4, dans lequel le second connecteur électrique (21) est disposé sur l'un des côtés de la tête du T de la prise mâle (20).

7. Dispositif (1) de connexion selon l'une quelconque des revendications 1 à 6, dans lequel le second connecteur électrique (21) est affleurant avec la surface de la prise mâle (20) de manière que le second connecteur électrique (21) est maintenu en contact avec le premier connecteur électrique (11) lorsque la prise mâle (20) est en position verrouillée.

8. Dispositif (1) de connexion selon l'une quelconque des revendications 1 à 7, comprenant des moyens pour mettre en prise la partie mâle (20) dans la partie femelle (10), tel qu'un système de fixation à baïonnette.

9. Dispositif (1) de connexion selon l'une quelconque des revendications 1 à 7, dans lequel la prise femelle (10) comprend des moyens de blocage de la prise mâle (20) dans la prise femelle (10) en position verrouillée.

10. Dispositif (1) de connexion selon l'une quelconque des revendications 1 à 9, dans lequel la prise mâle (20), la prise femelle (10) et le second connecteur électrique (21) sont réalisés en caoutchouc vulcanisé.

11. Dispositif (1) de connexion selon l'une quelconque des revendications 1 à 10, dans lequel la partie femelle (10) comprend au moins un dispositif électronique relié au réseau électrique indépendamment du premier connecteur électrique.

12. Dispositif (1) de connexion selon la revendication 11, dans lequel la partie femelle (10) comprend au moins un logement configuré pour recevoir ledit dispositif électronique.

13. Dispositif de connexion selon la revendication 11 ou 12, dans lequel le dispositif électronique est un moyen de communication sans fil.

14. Dispositif de connexion selon la revendication 11 ou 12, dans lequel le dispositif électronique est un détecteur de fumées.

## Patentansprüche

1. Anschlussvorrichtung (1), umfassend:
- eine Buchse (10) zum Installieren in einer Decke (71), wobei die Buchse (10) einen Hohlraum (12) mit einem Boden (120) aufweist, der einen ersten elektrischen Anschluss (11) aufnimmt, der dazu bestimmt ist, zumindest indirekt mit einem Stromnetz verbunden zu werden,
- einen Stecker (20), der einen zweiten elektrischen Anschluss (21) umfasst und eine zu dem Hohlraum (12) der Buchse komplementäre Form besitzt und konfiguriert ist, in der Buchse (10) lösbar in Eingriff zu gelangen, wobei sich der Stecker (20) aus einer entriegelten Position, in der der Stecker (20) in die Buchse (10) eingesteckt werden kann, in eine verriegelte Position, in der der Stecker (20) mit der Buchse (10) fest verbunden ist und der zweite elektrische Anschluss (21) axial mit dem ersten elektrischen Anschluss (11) zusammenwirkt, bewegen kann,
- einen elektrischen Leiter (40) mit einem ersten Ende (41), das mit dem zweiten elektrischen Anschluss (21) verbunden ist, und einem weiteren Ende (42), das so konfiguriert ist, dass es mit einer elektrischen Vorrichtung verbindbar ist, wobei der elektrische Leiter durch den Stecker (20) verläuft und der Stecker (20) und der elektrische Leiter (40) zwei unterschiedliche Elemente sind,
**dadurch gekennzeichnet, dass** der Stecker einen Kanal (22) aufweist, der sich über die gesamte Tiefe des Steckers (20) erstreckt, wobei der Kanal (22) in einen Aufnahmeraum (30) mündet, der mit einer in dem Stecker (20) ausgebildeten Schulter (31) versehen ist, und der Aufnahmeraum dazu vorgesehen ist, den zweiten elektrischen Anschluss (21) aufzunehmen,
und dass der elektrische Leiter (40) und der zweite elektrische Anschluss (21) ein einteiliges Element bilden, das dazu vorgesehen ist, in den Kanal (22) des Steckers (20) eingeführt zu werden, bis der zweite elektrische Anschluss (21) gegen die Schulter (31) in dem Aufnahmeraum (30) anstößt, derart, dass der zweite elektrische Anschluss (21) gegen die Schulter (31) des Aufnahmeraums (30) drückt und das Gewicht der elektrischen Vorrichtung aufnimmt.

2. Anschlussvorrichtung (1) nach Anspruch 1, wobei der zweite elektrische Anschluss (21) innerhalb des Aufnahmeraums (30) frei drehbar ist.

3. Anschlussvorrichtung (1) nach Anspruch 1 oder 2, wobei der zweite elektrische Anschluss (21) eine zu der Schulter (31) komplementäre Form hat.

4. Anschlussvorrichtung (1) nach Anspruch 1, **dadurch gekennzeichnet, dass** der Stecker (20) einstückig ist und die Form eines T hat, wobei der Hauptzug des T zylindrisch ist und der Kopf des T im Wesentlichen länglich ist.

5. Anschlussvorrichtung (1) nach Anspruch 4, wobei der zweite elektrische Anschluss (21) auf der Kopfoberseite des T des Steckers (20) angeordnet ist.

6. Anschlussvorrichtung (1) nach Anspruch 4, wobei der zweite elektrische Anschluss (21) an einer der Kopfseiten des T des Steckers (20) angeordnet ist.

7. Anschlussvorrichtung (1) nach einem der Ansprüche 1 bis 6, wobei der zweite elektrische Anschluss (21) mit der Oberfläche des Steckers (20) bündig ist, derart, dass der zweite elektrische Anschluss (21) in Kontakt mit dem ersten elektrischen Anschluss (11) gehalten wird, wenn der Stecker (20) in der verriegelten Position ist.

8. Anschlussvorrichtung (1) nach einem der Ansprüche 1 bis 7, umfassend Mittel, um den Stecker (20) in der Buchse (10) in Eingriff zu bringen, wie z.B. ein Bajonettbefestigungssystem.

9. Anschlussvorrichtung (1) nach einem der Ansprüche 1 bis 7, wobei die Buchse (10) Mittel zum Blockieren des Steckers (20) in der Buchse (10) in der verriegelten Position umfasst.

10. Anschlussvorrichtung (1) nach einem der Ansprüche 1 bis 9, wobei der Stecker (20), die Buchse (10) und der zweite elektrische Anschluss (21) aus vulkanisiertem Gummi hergestellt sind.

11. Anschlussvorrichtung (1) nach einem der Ansprüche 1 bis 10, wobei die Buchse (10) mindestens eine elektronische Vorrichtung umfasst, die unabhängig von dem ersten elektrischen Anschluss mit dem Stromnetz verbindbar ist.

12. Anschlussvorrichtung (1) nach Anspruch 11, wobei die Buchse (10) mindestens einen Aufnahmeraum umfasst, der zur Aufnahme der elektronischen Vorrichtung konfiguriert ist.

13. Anschlussvorrichtung nach Anspruch 11 oder 12, wobei die elektronische Vorrichtung ein drahtloses Kommunikationsmittel ist.

14. Anschlussvorrichtung nach Anspruch 11 oder 12, wobei die elektronische Vorrichtung ein Rauchdetektor ist.

## Claims

1. Connection device (1) comprising:
- a female socket (10) intended to be installed in a ceiling (71), the female socket (10) comprising a cavity (12) having a bottom (120) receiving a first electrical connector (11) intended to be at least indirectly connected to an electrical grid,
- a male plug (20) comprising a second electrical connector (21) and having a complementary shape to the female socket cavity (12), configured to removably engage in the female part (10), the male plug (20) being able to change from an unlocked position in which the male plug (20) can be inserted into the female socket (10), to a locked position in which the male plug (20) is secured to the female socket (10) and the second electrical connector (21) cooperates axially with the first electrical connector (11),
- an electrical conductor (40) comprising a first end (41) connected to the second electrical connector (21), and another end (42) configured to be connected to an electrical device, the electrical conductor extending through the male plug (20), the male plug (20) and the electrical conductor (40) being two distinct elements.
**characterized in that** the male plug includes a duct (22) extending throughout the height of the male plug (20), said duct (22) leading to a housing (30) provided with a shoulder (31) formed in the male plug (20), said housing being arranged to receive the second electrical connector (21),
and **in that** the electrical conductor (40) and the second electrical connector (21) form a one-piece element arranged to be inserted into the duct (22) of the male plug (20) until the second electrical connector (21) abuts against the shoulder (31) in the housing (30) such that the second electrical connector (21) rests on the shoulder (31) of the housing (30) and bears the weight of the electrical device.

2. Connection device (1) according to claim 1, wherein the second electrical connector (21) is free to rotate inside the housing (30).

3. Connection device (1) according to claim 1 or 2, wherein the second electrical connector (21) has a complementary shape to the shoulder (31).

4. Connection device (1) according to claim 1, **characterized in that** the male plug (20) is in one piece and is T-shaped, the body of the T shape being cylindrical and the head of the T being substantially oblong.

5. Connection device (1) according to claim 4, wherein the second electrical connector (21) is disposed on the top of the head of the T of the male plug (20).

6. Connection device (1) according to claim 4, wherein the second electrical connector (21) is disposed on one of the sides of the head of the T of the male plug (20).

7. Connection device (1) according to any of claims 1 to 6, wherein the second electrical connector (21) is flush with the surface of the male plug (20), such that the second electrical connector (21) is held in contact with the first electrical connector (11) when the male plug (20) is in the locked position.

8. Connection device (1) according to any of claims 1 to 7, comprising means for engaging the male part (20) in the female part (10), such as a bayonet mounting system.

9. Connection device (1) according to any of claims 1 to 7, wherein the female socket (10) comprises means for locking the male plug (20) in the female socket (10) in a locked position.

10. Connection device (1) according to any of claims 1 to 9, wherein the male plug (20), the female socket (10) and the second electrical conductor (21) are made of vulcanized rubber.

11. Connection device (1) according to any of claims 1 to 10, wherein the female part (10) includes at least one electronic device connected to the electrical grid independently of the first electrical connector.

12. Connection device (1) according to claim 11, wherein the female part (10) includes at least one housing configured to receive said electronic device.

13. Connection device according to claim 11 or 12, wherein the electronic device is a wireless communication means.

14. Connection device according to claim 11, or 12, wherein the electronic device is a smoke detector.
